# EUROPÄISCHE PATENTSCHRIFT

(11) **EP 0 587 049 B1**
(45) Veröffentlichungstag und Bekanntmachung des Hinweises auf die Patenterteilung: **12.03.1997**
(21) Anmeldenummer: 93114060.2
(22) Anmeldetag: 02.09.1993
(51) Int. Cl.: C04B 35/58, C01B 21/072

(54) **Verfahren zur Aufbereitung wasserempfindlicher keramischer Pulver zu einem rieselfähigen Pulver**
Method of preparing pourable powder from ceramic powder susceptible to water
Procédé de préparation de poudre coulant à partir de poudre céramique sensible à l'eau

(30) Priorität: 08.09.1992 DE 4230017
(43) Veröffentlichungstag der Anmeldung: 16.03.1994
(73) Patentinhaber: HOECHST AKTIENGESELLSCHAFT, 65926 Frankfurt am Main (DE)
(72) Erfinder: Güther, Hans-Michael, D-65779 Kelkheim/Taunus (DE); Seitz, Katharina, Dr., D-60596 Frankfurt am Main (DE); Hessel, Friedrich, Dr., D-55124 Mainz (DE); Schröder, Frank, Dr., D-50354 Hürth (DE); Köstler, Christine, Dr., D-65812 Bad Soden/Taunus (DE); Roosen, Andreas, Dr., D-65719 Hofheim (Taunus) (DE)

(56) Entgegenhaltungen:
- EP-A- 0 377 701
- WO-A-89/12505
- JP-A- 1 061 362
- PATENT ABSTRACTS OF JAPAN vol. 013, no. 021 (C-560)18. Januar 1989 & JP-A-63 225 507 (TOYO ALUM KK) 20. September 1988
- CHEMICAL ABSTRACTS, vol. 111, no. 6, 7. August 1989, Columbus, Ohio, US; abstract no. 44266f, NAKAMURA YOSHUKI & AL. 'Free flowing granulated aluminum nitride powder for press molding' Seite 313 ;
- DATABASE WPI Section Ch, Week 9104, Derwent Publications Ltd., London, GB; Class A32, AN 91-026261 & JP-A-2 296 708 (INAX CORP) 7. Dezember 1990
- PATENT ABSTRACTS OF JAPAN vol. 013, no. 021 (C-560)18. Januar 1989 & JP-A-63 225 507 (TOYO ALUM KK) 20. September 1988

## Beschreibung

Die vorliegende Erfindung betrifft ein Verfahren zur Aufbereitung wasserempfindlicher keramischer Pulver zu einem rieselfähigen granulierten Pulver. Insbesondere betrifft die Erfindung ein Verfahren zur Aufbereitung von Aluminiumnitrid-Pulver.

Bei der Herstellung von Formkörpern aus technischer-Keramik wird das keramische Pulver zunächst aufbereitet, bevor es zum Grünkörper geformt und der Grünkörper gesintert wird.

Bei feinen Pulvern tritt durch Oberflächenkräfte und ggf. feste Brücken infolge chemischer Bindung eine Agglomeration auf, die eine Verarbeitung zum Grünkörper erschwert oder unmöglich macht, da das agglomerierte Pulver nicht rieselfähig ist, und die zu Inhomogenitäten in der Mikrostruktur der gesinterten Keramik führt. Daher erfordert jedes Herstellungsverfahren von Keramikformkörpern eine spezielle Pulveraufbereitung, in der das Pulver deagglomeriert wird. Anschließend kann eine gezielte Agglomeration bei der Pulveraufbereitung erfolgen, um ein rieselfähiges granuliertes Pulver mit einer gewünschten Spezifikation zu erhalten. Rieselfähige granulierte Pulver werden z.B. verwendet, wenn die Formgebung zum Grünkörper durch Pressen erfolgt.

Wird der Grünkörper durch druckloses Flüssigphasensintern verdichtet, dient die Aufbereitung des Pulvers auch dazu, ein Sinterhilfsmittel homogen in dem keramischen Pulver zu verteilen.

Eine Möglichkeit der Pulveraufbereitung umfaßt ein Naßmahlen in Wasser mit anschließender Sprühtrocknung zu einem rieselfähigen granulierten Pulver. Bei einigen keramischen Pulvern führt diese Art der Pulveraufbereitung mit Wasser zu unerwünschten Veränderungen des Materials. Bei Aluminiumoxid-Pulver z.B. kann die Pulveroberfläche durch Wasser so verändert werden, daß das Verarbeitungsverhalten des Materials beim Spritzguß ungünstig beeinflußt wird. Ein besonderes Problem ergibt sich bei der Aluminiumnitrid-Pulveraufbereitung mit Wasser, da Aluminiumnitrid-Pulver sehr hydrolyseempfindlich ist. Die Hydrolyse hat zur Folge, daß die Wärmeleitfähigkeit der Aluminiumnitrid-Keramik wesentlich verschlechtert wird. Da Aluminiumnitrid-Keramik wegen ihrer sehr guten Wärmeleitfähigkeit zunehmend in der Elektronik Anwendung findet, z.B. als Substratwerkstoff in der Mikroelektronik, ist beim Herstellungsverfahren der Formkörper aus Aluminiumnitrid-Keramik darauf zu achten, daß eine Hydrolyse verhindert wird.

Eine Möglichkeit, Hydrolyse von Aluminiumnitrid-Pulver bei der Aufbereitung zu verhindern, besteht darin, organische Dispersionsmittel zur Aufbereitung des Pulvers zu verwenden. Organische Dispersionsmittel haben aber den Nachteil, daß sie gesundheitsschädlich und/oder umweltschädlich sind oder mit Luft explosive Gemische bilden.

Eine andere Möglichkeit sieht eine Beschichtung des Aluminiumnitrid-Pulvers vor, um einen direkten Kontakt von Pulver und Wasser während der Aufbereitung des Pulvers zu vermeiden. Das z.B. mit Polymeren oder Fettsäuren beschichtete Pulver läßt sich dann aber nicht oder nur schwer in Wasser dispergieren. Andere Beschichtungen können Probleme beim Ausbrennen oder Sintern ergeben, wenn größere Mengen dieser Fremdstoffe entfernt werden müssen.

In der EP 377 701 wird ein Verfahren zum Naßmahlen von keramischen Pulvern, insbesondere Zirkondioxid, beschrieben, bei dem in Anwesenheit von Ammoniak oder Alkylaminen mit Kochpunkten von maximal 100°C gemahlen wird. Diese Dispergiermittel werden dem in Wasser suspendierten Pulver in Mengen zugesetzt, die ausreichen, daß das Mahlgut eine genügend flüssige Konsistenz hat. Im Fall von Ammoniak und gasförmigen Alkylaminen werden die Dispergiermittel in Form von wäßrigen Lösungen eingesetzt.

JP-A-63 22 5507 beschreibt die Beschichtung vom AlN-Pulver durch Trockenmahlung des Pulvers mit 0,05-3 Gew% einer Verbindung, die aus Fettsäuren, Fettsäureamiden, primären und sekundären Aminen gewählt wird.

JP-A-1 061 362 beschreibt die Aufbereitung von AlN zu einem rieselfähigen Pulver, wobei das AlN-Pulver mit einem Sinterhilfsmittel (Y₂O₃) und einem grenzflächenaktiven Stoff (Stearinsäure) vermischt wird und die hydrophobe Gruppe des grenzflächenaktiven Stoffes zersetzt wird. Anschließend wird die Pulvermischung einer Granulierung unterworfen, wobei ein wasserlösliches organisches Polymer (Polyvinylalkohol) zugemischt und die Mischung durch Sprühtrocknung zu Granulaten geformt wird.

Aufgabe der vorliegenden Erfindung ist es, ein Verfahren der eingangs genannten Art zu schaffen, bei dem unerwünschte Veränderungen des keramischen Pulvers während der Aufbereitung vermieden werden, ohne auf den Einsatz von organischen Dispersionsmitteln zurückgreifen zu müssen.

Ausgehend von dem eingangs genannten Verfahren wird diese Aufgabe dadurch gelöst, daß das keramische Pulver in einem Trockenmahlschritt unter Zusatz von mindestens einem bei Raumtemperatur flüssigen Alkylamin in einer für eine monomolekulare Belegung der Oberfläche des keramischen Pulvers ausreichenden Menge deagglomeriert wird, das deagglomerierte Pulver unter intensivem Rühren mit einer konzentrierten wäßrigen Binderlösung oder -dispersion in Kontakt gebracht wird und anschließend bei Temperaturen unter 50°C schnell getrocknet wird.

Das Verfahren ist bei keramischen Pulvern anwendbar, bei denen der längere Kontakt mit Wasser zu unerwünschten Veränderungen führt, z.B. Aluminiumoxid. Insbesondere ist das Verfahren für das nach dem carbothermischen Verfahren hergestellte hydrolyseempfindliche Aluminiumnitrid-Pulver geeignet. Es wurde gefunden, daß nach dem carbothermischen Verfahren hergestelltes Aluminiumnitrid bei einem kurzzeitigen Kontakt mit Wasser noch nicht merklich hydrolysiert. Die Hydrolyse des Pulvers beginnt erst etwa nach 10 min. Dies kann man durch Messung des Leitwertes und des pH-Wertes feststellen, die als Maß für die Zersetzung des Aluminiumnitrids in Wasser angesehen werden können. Als Folge der Hydrolyse steigen beide Werte stark an.

Beim erfindungsgemäßen Verfahren ist daher der Kontakt des keramischen Pulvers mit Wasser während der Aufbereitung bezüglich Zeit und Menge auf ein Minimum reduziert, verglichen mit der herkömmlichen Aufbereitung in Wasser. Die Deagglomeration wird ohne Wasser in einem Trockenmahlschritt durchgeführt. Die Anwesenheit des Alkylamins bewirkt in dem Trockenmahlschritt eine optimale Deagglomeration und, sofern ein Sinterhilfsmittel eingearbeitet wird, eine gute homogene Verteilung des Sinterhilfsmittels in dem keramischen Pulver. Für den Trockenmahlschritt können übliche Mahlgeräte, wie z.B. Kugelmühlen, verwendet werden.

Erst während der Einbringung des Binders in Form einer konzentrierten wäßrigen Lösung oder Dispersion kommt das deagglomerierte keramische Pulver mit wenig Wasser kurzzeitig in Kontakt. Um die Kontaktzeit möglichst kurz zu halten, wird das Pulver intensiv gerührt. Dem Pulver wird in einem Granuliermischer mit schnell drehendem Rührwerk die Binderlösung oder -dispersion zugeführt. Vorzugsweise wird die konzentrierte wäßrige Binderlösung oder -dispersion in das Pulver eingespritzt, während es intensiv gerührt wird. Innerhalb von höchstens 10 min wird ein rieselfähiges Granulat erhalten.

Anschließend wird das Granulat bei Temperaturen unter 50°C getrocknet. Die Trocknung muß möglichst schnell und schonend durchgeführt werden. Temperaturen wesentlich unter 50°C sind bevorzugt. Besonders geeignet sind die Hochfrequenztrocknung, die Mikrowellentrocknung und die Gefriertrocknung.

Das so erhaltene rieselfähige granulierte Pulver mit einer mittleren Teilchengröße im Bereich von 20 bis 500 µm und insbesondere im Bereich von 50 bis 250 µm kann nach einem üblichen Verfahren durch Trockenpressen zu einem Grünkörper gepreßt werden, der durch anschließendes Sintern, z.B. unter Stickstoffatmospähre bei ca. 1850°C zu dem Formkörper verdichtet wird.

Mit dem erfindungsgemäßen Verfahren wird eine minimale Verunreinigung an durch Hydrolyse entstehenden Sauerstoffverbindungen des Grün- und Sinterkörpers erreicht. Bei Aluminiumnitrid werden dadurch Formkörper mit hoher Wärmeleitfähigkeit von über 150 W/mK erhalten.

Sofern drucklos gesintert werden soll, wird dem keramischen Pulver bei der Aufbereitung ein Sinterhilfsmittel zugesetzt, das während des Trockenmahlschrittes homogen in dem keramischen Pulver verteilt wird. Als Sinterhilfsmittel kommen z.B. Oxide von Seltenerdmetallen in Frage. Bevorzugt wird Yttriumoxid (Y₂O₃) verwendet.

Als Alkylamine werden bei Raumtemperatur flüssige Verbindungen eingesetzt. Insbesondere kommen primäre und sekundäre Alkylamine mit 2 bis 8 Kohlenstoffatomen je Alkylgruppe in Frage, wobei geradkettige Alkylgruppen bevorzugt sind. Primäre Alkylamine mit 2 bis 6 Kohlenstoffatomen und insbesondere Butylamin sind besonders bevorzugt.

Die Alkylamine müssen in einer Menge zugegeben werden, die ausreicht, eine monomolekulare Belegung der Oberfläche des keramischen Pulvers und des ggf. zugesetzten Sinterhilfsmittels zu ergeben. Die erforderliche Menge wird somit durch die spezifische Oberfläche des eingesetzten keramischen Pulvers bestimmt. Je größer die spezifische Oberfläche des verwendeten keramischen Pulvers ist, desto höher ist die zugesetzte Menge des Alkylamins. Aluminiumnitrid-Pulver haben in der Regel eine mittlere Teilchengröße von 0,5 bis 5 µm, insbesondere 1 bis 2 µm und eine spezifische Oberfläche von 1 bis 10 m²/g. Wesentlich größere Mengen als zur monomolekularen Belegung erforderlich sollten nicht verwendet werden, um möglichst wenig Stoffe in das Material einzubringen, die beim späteren Sintern entfernt werden müssen. Die zugesetzte Menge an Alkylaminen liegt im allgemeinen zwischen 0,1 bis 1,5 Gew.-%, bezogen auf das keramische Pulver bzw. auf das keramische Pulver und das Sinterhilfsmittel.

Als Binder werden bevorzugt wasserlösliche Binder verwendet, die eine niedrige Lösungsviskosität aufweisen und damit einen hohen Bindergehalt in der wäßrigen Binderlösung ermöglichen. Es können auch wäßrige Binderdispersionen eingesetzt werden. Der Gehalt an Binder in der Lösung bzw. Dispersion liegt bevorzugt zwischen 25 und 40 Gew.-% und insbesondere zwischen 30 und 40 Gew.-%. Ferner sollte der Binder eine niedrige Feuchtigkeitsaufnahme haben, um eine gute Lagerfähigkeit des hergestellten granulierten Pulvers zu garantieren. Beispiele für geeignete Binder sind Polyvinylalkohole, Cellulosederivate und polyestermodifizierte Polyurethanharze sowie Polymerdispersionen auf Acrylat/Methacrylatbasis.

Die Binderlösung bzw. -dispersion wird im allgemeinen in einer Menge zugegeben, daß der Bindergehalt 3 bis 5 Gew.-%, bezogen auf den Feststoffgehalt der Mischung, beträgt.

Zusätzlich zum Binder können als weitere Additive Preßhilfsmittel, z.B. Ölsäure, Polyethylenglykol oder Wachse, zusammen mit dem Binder dem deagglomerierten keramischen Pulver zugegeben werden.

Die Erfindung wird an Hand der folgenden Beispiele näher erläutert.

### Beispiel 1

### Trockenmahlschritt

100 g AlN-Pulver mit einer spezifischen Oberfläche von 3,2 m²/g und einer Korngrößenverteilung von d₉₀ - 3,8 µm, d₅₀ - 1,45 µm, d₁₀ - 1 µm, das 3 Gew.-% Y₂O₃ enthält, werden mit 0,2 Gew.-% Butylamin versetzt und in einem Mahltopf mit 400 g Mahlkörper 24h gemahlen. Das erhaltene Pulver wird isostatisch zu einem Prüfkörper gepreßt. Die chemische Analyse zeigt eine homogene Verteilung des Y₂O₃ im AlN.

### Vergleichsbeispiel 1

### Trockenmahlschritt

Das Verfahren von Beispiel 1 wird wiederholt mit der Ausnahme, daß statt 0,2 Gew.-% 0,05 Gew.-% Butylamin zugegeben werden. Das erhaltene Pulver wird isostatisch zu einem Prüfkörper gepreßt. Die chemische Analyse zeigt eine inhomogene Verteilung des Y₂O₃ im AlN.

### Beispiel 2

### Granulierschritt

2800 g des nach Beispiel 1 erhaltenen Pulvers werden in einem Granuliermischer (Firma Eirich) vorgelegt. Innerhalb von 2 min werden 57 g polyestermodifiziertes Polyurethanharz (®Daothan VTW 1226, Hersteller Hoechst AG) in 95 ml Wasser in das in dem Granuliermischer intensiv gerührte Pulver eingesprüht. Anschließend wird noch 1 min lang weitergerührt. Das erhaltene Granulat wird aus dem Granuliermischer in einen Gefriertrockner überführt und darin von Wasser befreit.

### Beispiel 3

### Herstellung des Formkörpers

5 g des in Beispiel 2 erhaltenen granulierten Pulvers mit einer mittleren Teilchengröße von 100 µm werden in eine Preßform gefüllt und mit einem Druck von 1000 bar zu einem tablettenförmigen Grünkörper mit einer Dichte von 60 % der theoretisch erreichbaren Gründichte verpreßt. Anschließend wird der Grünkörper bei 1840°C unter Stickstoff 3h gesintert. Der Formkörper hat eine Wärmeleitfähigkeit von 160 W/mK.

### Vergleichsbeispiel 2

### Granulierschritt

Das Beispiel 2 wird wiederholt mit der Ausnahme, daß das im Granuliermischer erhaltene Granulat nicht in einem Gefriertrockner, sondern in einem Umlufttrockenschrank bei 60°C 1h lang getrocknet wird.

Das erhaltene getrocknete Granulat riecht stark nach Ammoniak, die Granulatkörper sind vollständig zerstört und ein Preßversuch ist nicht mehr möglich.

## Patentansprüche

1. Verfahren zur Aufbereitung wasserempfindlicher keramischer Pulver zu einem rieselfähigen granulierten Pulver, dadurch gekennzeichnet, daß das keramische Pulver in einem Trockenmahlschritt unter Zusatz von mindestens einem bei Raumtemperatur flüssigen Alkylamin in einer für eine monomolekulare Belegung der Oberfläche des keramischen Pulvers ausreichenden Menge deagglomeriert wird, das deagglomerierte Pulver unter intensivem Rühren mit einer konzentrierten wäßrigen Binderlösung oder -dispersion in Kontakt gebracht wird und anschließend bei Temperaturen unterhalb 50°C schnell getrocknet wird.

2. Verfahren nach Anspruch 1, dadurch gekennzeichnet, daß als keramisches Pulver nach dem carbothermischen Verfahren hergestelltes Aluminiumnitrid-Pulver eingesetzt wird.

3. Verfahren nach Anspruch 1 oder 2, dadurch gekennzeichnet, daß das keramische Pulver zusammen mit einem Sinterhilfsmittel trocken gemahlen wird.

4. Verfahren nach Anspruch 3, dadurch gekennzeichnet, daß als Sinterhilfsmittel Yttriumoxid verwendet wird.

5. Verfahren nach einem der Ansprüche 1 bis 4, dadurch gekennzeichnet, daß primäre oder sekundäre Alkylamine mit 2 bis 8 Kohlenstoffatomen je Alkylgruppe eingesetzt werden.

6. Verfahren nach Anspruch 5, dadurch gekennzeichnet, daß primäre Alkylamine mit 2 bis 6 Kohlenstoffatomen verwendet werden.

7. Verfahren nach Anspruch 6, dadurch gekennzeichnet, daß Butylamin verwendet wird.

8. Verfahren nach einem der Ansprüche 1 bis 7, dadurch gekennzeichnet, daß das Alkylamin in einer Menge von 0,1 bis 1,5 Gew.-%, bezogen auf das keramische Pulver bzw. auf das keramische Pulver und das Sinterhilfsmittel, verwendet wird.

9. Verfahren nach einem der Ansprüche 1 bis 8, dadurch gekennzeichnet, daß die wäßrige Binderlösung oder -dispersion in das agglomerierte Pulver unter Rühren eingespritzt wird.

10. Verfahren nach einem der Ansprüche 1 bis 9, dadurch gekennzeichnet, daß als Binder ein polyestermodifiziertes Polyurethanharz verwendet wird.

11. Verfahren nach einem der Ansprüche 1 bis 10, dadurch gekennzeichnet, daß eine Binderlösung oder -dispersion mit einer Binderkonzentration von 30 bis 40 Gew.-% verwendet wird.

12. Verfahren nach einem der Ansprüche 1 bis 11, dadurch gekennzeichnet, daß durch Hochfrequenz-, Mikrowellen oder Gefriertrocknung getrocknet wird.

## Claims

1. A process for converting water-sensitive ceramic powders into a free-flowing granulated powder, which comprises deagglomerating the ceramic powder in a dry milling step with addition in an amount sufficient to give a monomolecular layer on the surface of the ceramic powder of at least one alkylamine which is liquid at room temperature, vigorously stirring the deagglomerated powder with a concentrated aqueous solution or dispersion of binder and subsequently drying rapidly at temperatures below 50°C.

2. The process as claimed in claim 1, wherein the ceramic powder used is a carbothermically produced aluminum nitride powder.

3. The process as claimed in claim 1 or 2, wherein the ceramic powder is dry milled together with a sintering aid.

4. The process as claimed in claim 3, wherein the sintering aid used is yttrium oxide.

5. The process as claimed in any one of claims 1 to 4, wherein primary or secondary alkylamines having from 2 to 8 carbon atoms per alkyl group are used.

6. The process as claimed in claim 5, wherein primary alkylamines having from 2 to 6 carbon atoms are used.

7. The process as claimed in claim 6, wherein butylamine is used.

8. The process as claimed in any one of claims 1 to 7, wherein the alkylamine is used in an amount of from 0.1 to 1.5% by weight, based on the ceramic powder or on the mixture of ceramic powder and sintering aid.

9. The process as claimed in any one of claims 1 to 8, wherein the aqueous solution or dispersion of binder is sprayed into the agglomerated powder while stirring.

10. The process as claimed in any one of claims 1 to 9, wherein the binder used is a polyester-modified polyurethane resin.

11. The process as claimed in any one of claims 1 to 10, wherein a solution or dispersion of binder having a binder concentration of from 30 to 40% by weight is used.

12. The process as claimed in any one of claims 1 to 11, wherein drying is effected by high frequency, microwave or freeze drying.

## Revendications

1. Procédé de préparation d'une poudre granulée coulante à partir de poudre céramique sensible à l'eau, caractérisé en ce que la poudre céramique est désagglomérée dans une étape de broyage à sec en présence d'au moins une alkylamine liquide à la température ambiante en une quantité suffisante pour déposer un revêtement monomoléculaire à la surface de la poudre céramique, la poudre désagglomérée est mise en contact avec une solution ou une dispersion aqueuse, concentrée de liant sous agitation intensive et est ensuite séchée rapidement à des températures inférieures à 50°C.

2. Procédé selon la revendication 1, caractérisé en ce qu'on utilise comme poudre céramique de la poudre de nitrure d'aluminium préparée selon le procédé carbothermique.

3. Procédé selon la revendication 1 ou 2, caractérisé en ce que la poudre céramique est broyée à sec ensemble avec un adjuvant de frittage.

4. Procédé selon la revendication 3, caractérisé en ce qu'on utilise de l'oxyde d'yttrium comme adjuvant de frittage.

5. Procédé selon l'une des revendications 1 à 4, caractérisé en ce qu'on utilise des alkylamines primaires ou secondaires avec 2 à 8 atomes de carbone par groupe alkyle.

6. Procédé selon la revendication 5, caractérisé en ce qu'on utilise des alkylamines primaires avec 2 à 6 atomes de carbone.

7. Procédé selon la revendication 6, caractérisé en ce qu'on utilise la butylamine.

8. Procédé selon l'une des revendications 1 à 7, caractérisé en ce qu'on utilise l'alkylamine en une quantité de 0,1 à 1,5 % en poids, par rapport à la poudre céramique ou respectivement à la poudre céramique et à l'adjuvant de frittage.

9. Procédé selon l'une des revendications 1 à 8, caractérisé en ce que la solution ou la dispersion aqueuse de liant est introduite dans la poudre agglomérée par injection sous agitation.

10. Procédé selon l'une des revendications 1 à 9, caractérisé en ce qu'on utilise comme liant une résine de polyuréthane modifiée par des polyesters.

11. Procédé selon l'une des revendications 1 à 10, caractérisé en ce qu'on utilise une solution ou une dispersion de liant ayant une concentration en liant de 30 à 40 % en poids.

12. Procédé selon l'une des revendications 1 à 11, caractérisé en ce qu'on sèche par séchage à haute fréquence, séchage par micro-ondes ou cryodessication.
